# EUROPEAN PATENT APPLICATION

(11) **EP 2 698 419 A1**
(43) Date of publication of application: **19.02.2014**
(21) Application number: 12763275.0
(22) Date of filing: 26.03.2012
(51) Int. Cl.: C10M 169/00, C10M 101/02, C10M 133/16, C10M 133/56, F16C 33/10, C10N 10/02, C10N 20/04, C10N 30/06, C10N 50/10

(54) **GREASE COMPOSITION**

(30) Priority: 31.03.2011 JP 2011077836
(71) Applicant: JX Nippon Oil & Energy Corporation, Chiyoda-ku Tokyo 100-8162 (JP)
(72) Inventor: AYAME Yusuke, Tokyo 100-8162 (JP); KUROSAWA Osamu, Tokyo 100-8162 (JP); SAKAMOTO Kiyomi, Tokyo 100-8162 (JP)
(74) Representative: Grünecker, Kinkeldey, Stockmair & Schwanhäusser
(86) International application number: PCT/JP2012/057802
(87) International publication number: WO 2012/133345

(57) **Abstract**

The present invention provides a grease composition containing at least one lubricating base oil selected from a mineral oil and a synthetic oil, and 1 to 40% by mass of a thickener and 0.5 to 15% by mass of an alkenyl succinimide based on the total amount of the grease composition, the grease composition being used for a lubricating part in which at least one of members is made of a non-ferrous metal. According to the grease composition of the present invention, galling (seizure) and wear can be suffciently suppressed and sliding properties can be achieved at a high level even in the case where sliding is performed under extreme pressure conditions where a sliding part having a non-ferrous metal is subjected to a high load.

## Description

### Technical Field

The present invention relates to a lubricating oil and a grease composition, and particularly relates to a grease composition having favorable antiwear performance in a friction part of a non-ferrous metal.

### Background Art

Non-ferrous metals such as aluminum and alloys thereof (hereinafter, also referred to as the aluminum material) are light metals which are strong and are good in thermal conductivity, and are generally used in the fields of transport and structure in which weight savings are important.

Conventionally, as grease compositions for use in lubrication of a sliding part having a non-ferrous metal, generally used grease compositions have been used in many cases. However, in this case, the fact is that sufficient sliding properties are not achieved.

Then, as a means for improving lubricating properties to non-ferrous metals, use of additives such as higher alcohols, fatty acid esters, fatty acids, alkylene glycol-esterified products, and α-olefins has been proposed. It is considered that, among these additives, particularly higher alcohols, secondly fatty acid esters are high in the effect of improving lubricating properties (see Patent Literature 1).

### Citation List

### Patent Literature

[Patent Literature 1] Japanese Unexamined Patent Application Publication No. 8-53685

### Summary of Invention

### Technical Problem

However, even in the case of the grease composition using the additives, there is no effect in the case where sliding is performed under extreme pressure conditions where a sliding part having a non-ferrous metal is subjected to a high load, resulting in galling (seizure) to allow wear to rapidly progress.

In addition, additives such as an organic molybdenum compound such as tricresyl phosphate (TCP) or molybdenum dithiocarbamate (MoDTC) exhibit the effect of preventing seizure under extreme pressure conditions during sliding between iron materials, but such an effect is due to the chemical reaction of iron and the additives. Therefore, even if these additives are used, the surface modification by the chemical reaction is not made to a non-ferrous metal, and the effect of preventing galling is not observed.

The present invention has made under such circumstances, and an object thereof is to provide a grease composition that enables galling (seizure) and wear to be sufficiently suppressed and that enables sliding properties to be achieved at a high level even in the case where sliding is performed under extreme pressure conditions where a sliding part having a non-ferrous metal is subjected to a high load.

### Solution to Problem

In order to solve the above problem, the present invention provides a grease composition containing at least one lubricating base oil selected from a mineral oil and a synthetic oil, and 1 to 40% by mass of a thickener and 0.5 to 15% by mass of an alkenyl succinimide based on the total amount of the grease composition, for use in a lubricating part in which at least one of members is made of a non-ferrous metal.

The alkenyl succinimide in the present invention is preferably at least one selected from an alkenyl succinimide not containing boron and a boron-containing alkenyl succinimide whose boron content is more than 0 % by mass and 1.0% by mass or less based on the total amount of the boron-containing alkenyl succinimide.

In addition, the alkenyl succinimide preferably has a polybutenyl group whose weight average molecular weight is 2000 or less.

In addition, the non-ferrous metal is preferably at least one selected from aluminum, magnesium, copper, titanium, nickel, chromium, zinc, tin, lead and titanium, and alloys of two or more thereof, and it is more preferable that the non-ferrous metal be at least one selected from aluminum, magnesium, copper and titanium, and alloys thereof.

In addition, the Vickers hardness of the non-ferrous metal is preferably 150 or less. Other aspect of the present invention provides a lubricating method of bringing the above-described grease composition into contact with a lubricating part in which at least one of members is made of a non-ferrous metal.

### Advantageous Effects of Invention

According to the present invention, a grease composition that enables galling (seizure) and wear to be sufficiently suppressed and that enables sliding properties to be achieved at a high level even in the case where sliding is performed under extreme pressure conditions where a sliding part having a non-ferrous metal is subjected to a high load.

### Description of Embodiments

Hereinafter, a suitable embodiment of the present invention will be described in detail.

A grease composition according to the present embodiment contains at least one lubricating base oil selected from a mineral oil and a synthetic oil, and 1 to 40% by mass of a thickener and 0.5 to 15% by mass of an alkenyl succinimide based on the total amount of the grease composition.

Examples of the lubricating base oil include a mineral oil and/or a synthetic oil. Examples of the mineral oil include those which are obtained by a procedure usually carried out in a lubricating oil production process of the petroleum refining industry, for example, by refining a lubricating oil fraction obtained from normal-pressure distillation and reduced-pressure distillation of crude oil by carrying out one or more of treatments such as solvent deasphalting, solvent extraction, hydrocracking, solvent dewaxing, catalytic dewaxing, hydrogenation refining, sulfuric acid washing, and a clay treatment.

In addition, examples of the synthetic oil include poly-α-olefins such as polybutene, a 1-octene oligomer, and a 1-decene oligomer, or hydrogenated products thereof, ethylene-α-olefin copolymers; diesters such as ditridecyl glutarate, di-2-ethylhexyl adipate, diisodecyl adipate, ditridecyl adipate, and di-3-ethylhexyl sebacate; polyol esters such as trimethylolpropane caprylate, trimethylolpropane pelargonate, pentaerythritol-2-ethyl hexanoate, and pentaerythritol pelargonate; alkylnaphthalenes; alkylbenzenes, polyoxyalkylene glycols; polyphenyl ethers; dialkyl diphenyl ethers; silicone oil; or mixtures thereof.

As the thickener, every thickener including soaps such as a metal soap and a composite metal soap,; and non-soaps such as bentone, silica gel, a urea compound, a urethane●urea compound, and a urethane compound can be used. Among the non-soap thickeners, a urea-based thickener made of a urea compound or a urethane●urea compound is preferable because it has no metal within the structure thereof to be excellent in oxidative stability, and is high in dropping point to be kept in the form of gel even at a high temperature.

The content of the thickener is 1 to 40% by mass and preferably 3 to 30% by mass based on the total amount of the grease composition. In the case where the content of the thickener is less than 1% by mass, the effect as the thickener is low and thus is not sufficient in the form of grease, and in the case where it is more than 40% by mass, the obtained grease is too hard as grease to exert sufficient lubricating performance.

Examples of the alkenyl succinimide include an alkenyl succinimide compound having at least one straight or branched alkyl group or alkenyl group whose carbon number is 40 to 400, preferably 60 to 350, in the molecule. In the case where the carbon number of the alkyl group or alkenyl group is less than 40, the solubility of the compound in the lubricating base oil may be decreased, and on the other hand, in the case where the carbon number of the alkyl group or alkenyl group is more than 400, the low temperature fluidity of a lubricating oil composition may be deteriorated. The alkyl group or alkenyl group may be straight or branched, and preferred specific examples thereof include a branched alkyl group or a branched alkenyl group derived from oligomers of olefins such as propylene, 1-butene and isobutylene, and an ethylene-propylene co-oligomer.

More specific examples of the alkenyl succinimide in the present embodiment include a mono-type alkenyl succinimide represented by the following formula (1), in which succinic anhydride is added to one end of a polyamine in imidation, and/or a bis-type alkenyl succinimide represented by the following formula (2), in which succinic anhydride is added to both ends of a polyamine in imidation.

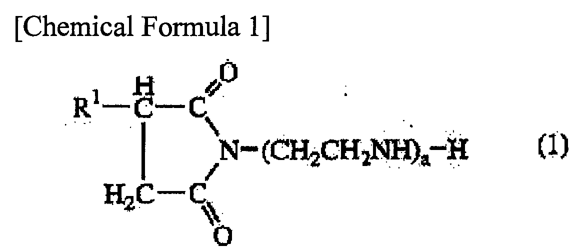

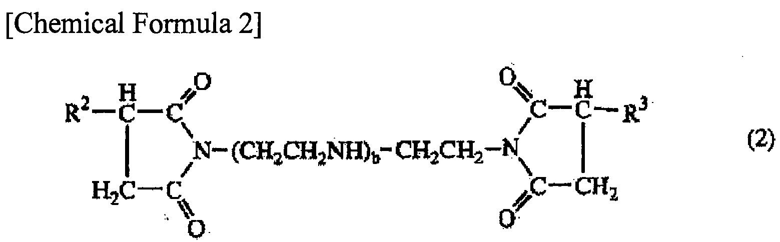

In the above formula (1) and formula (2), R¹, R² and R³ each independently represent a straight or branched alkyl group or alkenyl group whose carbon number is 40 to 400, preferably whose carbon number is 60 to 350. a represents an integer of 1 to 10, preferably an integer of 2 to 5, and b represents an integer of 1 to 10, preferably an integer of 2 to 5.

In the present invention, any of the mono-type and bis-type succinimides can be used, and the number average molecular weight of the entire component contained is preferably 500 to 10000, more preferably 1000 to 5000, and further preferably 2000 to 4000. The weight average molecular weight of the succinimide is 1000 to 20000, more preferably 2000 to 10000, and further preferably 3000 to 5000. If the number average molecular weight is less than the lower limit, the solubility in the lubricating base oil may be decreased, and if it is more than the upper limit, the low temperature fluidity of a lubricating oil composition may be deteriorated. In addition, in the cases where the number average molecular weight is less than the lower limit and where it is more than the upper limit, sufficient antiwear properties are not achieved during sliding. The molecular weight of the succinimide in the present invention was measured by GPC (gel permeation chromatography).

In the alkenyl succinimides represented by the above formulae (1) and (2), the weight average molecular weights of the groups represented by R¹, R² and R³ are preferably 200 to 5000, more preferably 500 to 2000, and further preferably 700 to 1500.

In addition, the nitrogen content of the alkenyl succinimide is preferably 0.5 to 5% by mass, and more preferably 1 to 3% by mass.

The method for producing the alkenyl succinimide is not particularly limited, and for example, the alkenyl succinimide is obtained by reacting a compound having an alkyl group or alkenyl group whose carbon number is 40 to 400 with maleic anhydride at 100 to 200°C to obtain an alkyl succinic acid or alkenyl succinic acid, and reacting the alkyl succinic acid or alkenyl succinic acid with a polyamine.

Examples of the polyamine include diethylenetriamine, triethylenetetramine, tetraethylenepentamine, and pentaethylenehexamine.

The boron-containing alkenyl succinimide can be obtained by allowing a boron compound such as boric acid, borate or boric acid ester to act on the alkenyl succinimides represented by the above formula (1) and formula (2). Examples of the boric acid include orthoboric acid, metaboric acid, or tetraboric acid.

As the succinimide compound in the present embodiment, any of one containing boron and one not containing boron can be used, but the alkenyl succinimide not containing boron is preferable from the viewpoint of seizure resistance, and the boron content in the case of blending the boron-containing alkenyl succinimide is more than 0% by mass and 1.0% by mass or less, preferably more than 0% by mass and 0.5% by mass or less, and more preferably more than 0% by mass and 0.025% by mass or less, based on the total amount of the boron-containing alkenyl succinimide. If the boron content is more than 1.0% by mass, the seizure resistance of the aluminum material may be insufficient.

The content of the alkenyl succinimide is 0.5 to 15% by mass and preferably 1.5 to 10% by mass based on the total amount of the grease composition. If the content of the alkenyl succinimide is less than 0.5% by mass, the effect of adding the alkenyl succinimide is not sufficiently exerted, and on the other hand, if it is more than 10% by mass, the effect matching the content of the alkenyl succinimide is not achieved in terms of the seizure resistance of the aluminum material, resulting in an economic disadvantage.

The grease composition according to the present embodiment can, if necessary, contain additives such as a solid lubricating agent, an extreme pressure agent, an antioxidizing agent, an oily agent, a rust-preventive agent, and a viscosity index improver in order to further enhance performance, as long as properties thereof are not impaired.

Specific examples of the solid lubricating agent include graphite, carbon black, boron nitride, graphite fluoride, polytetrafluoroethylene, molybdenum disulfide, antimony sulfide, and alkali (earth) metal borates.

Specific examples of the antioxidizing agent include phenol-based compounds such as 2,6-di-t-butylphenol and 2,6-di-t-butyl-p-cresol; amine-based compounds such as dialkyl diphenylamine, phenyl-α-naphthylamine, and p-alkylphenyl-α-naphthylamine; sulfur-based compounds; and phenothiazine-based compounds.

Specific examples of the extreme pressure agent include sulfide fats and oils, sulfide esters, sulfides, organic molybdenum compounds, phosphoric acid esters, phosphorous acid esters, acidic phosphoric acid esters, thiophosphates, and thiophosphites.

Specific examples of the oily agent include amines such as laurylamine, myristylamine, palmitylamine, stearylamine, and oleylamine; higher alcohols such as lauryl alcohol, myristyl alcohol, palmityl alcohol, stearyl alcohol, and oleyl alcohol; higher fatty acids such as lauric acid, myristic acid, palmitic acid, stearic acid, and oleic acid; fatty acid esters such as methyl laurate, methyl myristate, methyl palmitate, methyl stearate, methyl oleate, glycerol monooleate, and glycerol monostearate; amides such as laurylamide, myristylamide, palmitylamide, stearylamide, and oleylamide; and fats and oils.

Specific examples of the rust-preventive agent include metal soaps; polyhydric alcohol partial esters such as sorbitan fatty acid ester; amines; phosphoric acid; and phosphates.

Specific examples of the viscosity index improver include polymethacrylate, polyisobutylene, and polystyrene.

The dropping point of the grease composition according to the present embodiment is preferably 80°C or higher and more preferably 150°C or higher. If the dropping point is lower than the lower limit, the grease composition cannot be kept in the form of gel in use at a constant temperature, resulting in lubrication failure and contamination of surrounding in some cases.

The grease composition according to the present embodiment can be suitably used for lubricating a lubricating part in which at least one of members has aluminum or a non-ferrous metal. Therefore, the grease composition according to the present embodiment is very useful as grease for non-ferrous metals in the fields of transport and structure in which weight savings are important. Herein, the reason why the grease composition according to the present embodiment has the excellent effects as described above is because the alkenyl succinimide compound strongly adsorbs to the non-ferrous metal to form a robust oil film, thereby leading to significant enhancement in lubricating properties.

As the non-ferrous metal; at least one selected from aluminum, magnesium, copper, titanium, nickel, chromium zinc, tin, lead and titanium, and alloys thereof can be used. It is more preferable that the non-ferrous metal be, among them, at least one selected from aluminum, magnesium, copper and titanium, and alloys thereof. Herein, it is preferable that these alloys be made of metal such as aluminum as a main component, and it is preferable that the content of metals other than the main component be less than 10% by mass and further less than 2% by mass.

In addition, it is preferable that the Vickers hardness of the non-ferrous metal be 150 or less, and it is more preferable that it be 100 or less.

### Examples

Hereinafter, the present invention will be more specifically described based on Examples and Comparative Examples, but the present invention is not limited to the following Examples at all.

### [Examples 1 to 11, Comparative Examples 1 to 6]

In Examples 1 to 11 and Comparative Examples 1 to 6, each of lubricating base oils and each of additives shown below were used to prepare a grease composition having composition shown in Tables 1 to 3. Herein, the nitrogen content and the boron content of each of C1 to C4 mean the contents of nitrogen and boron based on the total amount of the boron-containing alkenyl succinimide.

### <Lubricating Base Oil>

A1: poly-α-olefin (kinetic viscosity at 40°C: 47 mm²/s)
A2: mineral oil (highly refined oil, kinetic viscosity at 40°C: 95 mm²/s)
A3: polyol ester oil (kinetic viscosity at 40°C: 30 mm²/s)

### <Thickener>

B 1: urea-based thickener
B2: Ca soap
B3: Li soap
B4: Li soap-mixed soap

### <Alkenyl Succinimide>

C1: alkenyl succinimide (weight average molecular weight of polybutenyl group: 1000, nitrogen content: 1.3%, boron content: 0%, number average molecular weight of entire compound: 3030, weight average molecular weight of entire compound: 4490)
C2: boron-containing alkenyl succinimide (weight average molecular weight of polybutenyl group: 1300, nitrogen content: 1.6%, boron content: 0.44%, number average molecular weight of entire compound: 3070, weight average molecular weight of entire compound: 4430)
C3: boron-containing alkenyl succinimide (weight average molecular weight of polybutenyl group: 1000, nitrogen content: 2.3%, boron content: 1.9%, number average molecular weight of entire compound: 3010, weight average molecular weight of entire compound: 4180)
C4: boron-containing alkenyl succinimide (weight average molecular weight of polybutenyl group: 2300, nitrogen content: 0.88%, boron content: 0.23%, number average molecular weight of entire compound: 4940, weight average molecular weight of entire compound: 8040)

### <Other additives>

D1: lauryl alcohol
D2: glycerol monooleate
D3: TCP (tricresyl phosphate)
D4: MoDTC (molybdenum dithiocarbamate)

The specific method of adjusting each of the grease compositions of Examples 1 to 11 and Comparative Examples 1 to 6 is as follows.

First, in Examples 1 to 6, 10 and 11, and Comparative Example 2, diphenylmethane-4,4'-diisocyanate was dissolved in any of lubricating base oils A1 to A3 with heating, and a product prepared by dissolving cyclohexylamine in any of lubricating base oils A1 to A3 with heating was added thereto. Any of alkenyl succinimides C1 to C4 was added to the produced gel-like substance, stirred and then passed through a roll mill to obtain a urea-based grease composition.

In addition, in Examples 7 to 9, a thickener B2, B3 or B4 and an alkenyl succinimide C1 were added to a lubricating base oil A1 (poly-α-olefin), stirred and then passed through a roll mill to obtain a soap type grease composition.

In addition, in Comparative Example 1, diphenylmethane-4,4'-diisocyanate was dissolved in a lubricating base oil A1 with heating, and a product prepared by dissolving cyclohexylamine in any of lubricating base oils A1 to A3 with heating was added thereto. The produced gel-like substance was stirred, and then passed through a roll mill to obtain a urea-based grease composition.

In addition, in Comparative Examples 3 to 6, diphenylmethane-4,4'-diisocyanate was dissolved in a lubricating base oil A1 with heating, and a product prepared by dissolving cyclohexylamine in a lubricating base oil A1 with heating was added thereto. Any of other additives D1 to D4 was added to the produced gel-like substance, stirred and then passed through a roll mill to obtain a urea-based grease composition. Herein, the dropping point of the urea-based grease composition of the present Example was 250°C or higher.

### [SRV Oscillating Friction and Wear Test I]

Each of the grease compositions of Examples 1 to 11 and Comparative Examples 1 to 6 was subjected to the SRV friction and wear test under the following conditions to measure an SRV test seizure load (N).

### <Test Conditions>

Test piece: 10 mmφ steel ball (SUJ2)/aluminum alloy plate (ADC12)
Oil temperature: 25°C
Stroke: 2 mm
Frequency: 30Hz
Time: 10 minutes

In accordance with ASTM D5706-97 (Standard Test Method for Determining Extream Pressure Properties of Lubricating greases Using A High-Frequency, Linera-Oscillation (SRV) Test Machine), a load at the time when the friction coefficient exceeded 0.2 during the sliding test for 10 minutes was determined as a seizure load (N).

The obtained results are shown in Tables 1 to 3.

**[Table 1]**

| | | Example 1 | Example 2 | Example 3 | Example 4 | Example 5 | Example 6 |
|---|---|---|---|---|---|---|---|
| Lubricating base oil, % by mass | A1 | Balance | Balance | Balance | Balance | - | - |
| | A2 | - | - | - | - | Balance | - |
| | A3 | - | - | - | - | - | Balance |
| Thickener, % by mass | B1 | 17 | 17 | 17 | 17 | 17 | 17 |
| | B2 | - | - | - | - | - | - |
| | B3 | - | - | - | - | - | - |
| | B4 | - | - | - | - | - | - |
| Alkenyl succinimide, % by mass | C1 | 10 | 5 | 0.5 | - | 5 | 5 |
| | C2 | - | - | - | 5 | - | - |
| | C3 | - | - | - | - | - | - |
| | C4 | - | - | - | - | - | - |
| Other additives, % by mass | D1 | - | - | - | - | - | - |
| | D2 | - | - | - | - | - | - |
| | D3 | - | - | - | - | - | - |
| | D4 | - | - | - | - | - | - |
| SRV test seizure load, N | | 350 | 300 | 250 | 200 | 300 | 300 |

**[Table 2]**

| | | Example 7 | Example 8 | Example 9 | Example 10 | Example 11 |
|---|---|---|---|---|---|---|
| Lubricating base oil, % by mass | A1 | Balance | Balance | Balance | Balance | Balance |
| | A2 | - | - | - | - | - |
| | A3 | - | - | - | - | - |
| Thickener, % by mass | B1 | - | - | - | 17 | 17 |
| | B2 | 13 | - | - | - | - |
| | B3 | - | 10 | - | - | - |
| | B4 | - | - | 10 | - | - |
| Alkenyl succinimide, % by mass | C1 | 5 | 5 | 5 | - | - |
| | C2 | - | - | - | - | - |
| | C3 | - | - | - | 5 | - |
| | C4 | | - | - | - | 5 |
| Other additives, % by mass | D1 | - | - | - | - | 5 |
| | D2 | - | - | - | - | - |
| | D3 | - | - | - | - | - |
| | D4 | - | - | - | - | - |
| SRV test seizure load, N | | 350 | 250 | 300 | 200 | 200 |

**[Table 3]**

| | | Comparati ve Example 1 | Comparati ve Example 2 | Comparati ve Example 3 | Comparati ve Example 4 | Comparati ve Example 5 | Comparati ve Example 6 |
|---|---|---|---|---|---|---|---|
| Lubricating base oil, % by mass | A1 | Balance | Balance | Balance | Balance | Balance | Balance |
| | A2 | - | - | - | - | - | - |
| | A3 | - | - | - | - | - | - |
| Thickener, % by mass | B1 | 17 | 17 | 17 | 17 | 17 | |
| | B2 | - | - | - | - | - | 13 |
| | B3 | - | - | - | - | - | - |
| | B4 | - | - | - | - | - | - |
| Alkenyl succinimide, % by mass | C1 | - | 0.2 | - | - | - | - |
| | C2 | - | - | - | - | - | - |
| | C3 | - | - | - | - | - | - |
| | C4 | - | - | - | - | - | - |
| Other additives, % by mass | D1 | - | - | 5 | - | - | - |
| | D2 | - | - | - | 5 | - | - |
| | D3 | - | - | - | - | 5 | - |
| | D4 | - | - | - | - | - | 5 |
| SRV test seizure load, N | | 100 | 100 | 100 | 100 | 100 | 100 |

It can be seen from the results shown in Tables 1 and 2 that the grease compositions of Examples 1 to 11 are each a grease composition whose seizure load in sliding of an iron-aluminum alloy is high to allow the frictional wear of iron and an aluminum alloy to be lower.

On the contrary, it can be seen from the results shown in Table 3 that the grease compositions of Comparative Examples 1 and 2, to which the alkenyl succinimide is not added, are insufficient in the effect of reducing wear on sliding of an iron-aluminum alloy. Also, the grease compositions of Comparative Examples 4 to 5 are insufficient in the effect of reducing wear on sliding of an iron-aluminum alloy under a high load, although they each contain lauryl alcohol or glycerol monooleate having an effect on antiwear properties of a non-ferrous metal.

It can also be seen that the grease compositions of Comparative Examples 6 to 7 are insufficient in the effect of reducing wear on sliding of an iron-aluminum alloy as in the grease compositions of Comparative Examples 1 and 2, although they each contain tricresyl phosphate (TCP) or an organic molybdenum compound (MoDTC) having the effect of preventing seizure between iron materials under extreme pressure.

The results support that, even if lauryl alcohol, glycerol monooleate, TCP or MoDTC is used, the surface modification by the chemical reaction is not made to the aluminum material, not achieving the effect of preventing galling (seizure).

### [Examples 12 to 17, Comparative Examples 7 to 9]

In Examples 12 to 17 and Comparative Examples 7 to 9, each of the lubricating base oils A1 to A3 and each of the additives B1, C1, C2, D1 and D3 were used to prepare a grease composition having composition shown in Tables 4 and 5.

The specific method of adjusting each of the grease compositions of Examples 12 to 17 and Comparative Examples 7 to 9 is as follows.

First, in Examples 12 to 17, diphenylmethane-4,4'-diisocyanate was dissolved in any of the lubricating base oils A1 to A3 with heating, and a product prepared by dissolving cyclohexylamine in any of the lubricating base oils A1 to A3 with heating was added thereto. Any of the alkenyl succinimides C1 and C2 was added to the produced gel-like substance, stirred and then passed through a roll mill to obtain a urea-based grease composition.

In addition, in Comparative Examples 7, diphenylinethane-4,4'-diisocyanate was dissolved in the lubricating base oil A1 with heating, and a product prepared by dissolving cyclohexylamine in any of the lubricating base oils A1 to A3 with heating was added thereto. The produced gel-like substance was stirred, and then passed through a roll mill to obtain a urea-based grease composition.

In addition, in Comparative Examples 8 and 9, diphenylmethane-4,4'-diisocyanate was dissolved in the lubricating base oil A1 with heating, and a product prepared by dissolving cyclohexylamine in the lubricating base oil A1 with heating was added thereto. Any of other additives D1 to D4 was added to the produced gel-like substance, stirred and then passed through a roll mill to obtain a urea-based grease composition.

### [SRV Oscillating Friction and Wear test II]

Each of the grease compositions of Examples 12 to 17 and Comparative Examples 7 to 9 was subjected to the SRV friction and wear test in the same manner as in the above SRV oscillating friction and wear test I except that the aluminum alloy plate (ADC12) of the test piece was changed to a magnesium alloy plate (AZ31), to measure an SRV test seizure load (N). The obtained results are shown in Tables 4 and 5.

**[Table 4]**

| | | Example 12 | Example 13 | Example 14 | Example 15 | Example 16 | Example 17 |
|---|---|---|---|---|---|---|---|
| Lubricating base oil, % by mass | A1 | - | - | - | - | Balance | - |
| | A2 | Balance | Balance | Balance | Balance | - | - |
| | A3 | - | - | - | - | - | Balance |
| Thickener, % by mass | B1 | 17 | 17 | 17 | 17 | 17 | 17 |
| | B2 | - | - | - | - | - | - |
| | B3 | - | - | - | - | - | - |
| | B4 | - | - | - | - | - | - |
| Alkenyl succinimide, % by mass | C1 | 10 | 5 | 0.5 | - | 5 | 5 |
| | C2 | - | - | - | 5 | - | - |
| | C3 | - | - | - | - | - | - |
| | C4 | - | - | - | - | - | - |
| Other additives, % by mass | D1 | - | - | - | - | - | - |
| | D2 | - | - | - | - | - | - |
| | D3 | - | - | - | - | - | - |
| | D4 | - | - | - | - | - | - |
| SRV test seizure load, N | | 400 | 300 | 200 | 200 | 300 | 300 |

**[Table 5]**

| | | Comparative Example 7 | Comparative Example 8 | Comparative Example 9 |
|---|---|---|---|---|
| Lubricating base oil, % by mass | A1 | Balance | Balance | Balance |
| | A2 | - | - | - |
| | A3 | - | - | - |
| Thickener, % by mass | B1 | 17 | 17 | 17 |
| | B2 | - | - | - |
| | B3 | - | - | - |
| | B4 | - | - | - |
| Alkenyl succinimide, % by mass | C1 | - | - | - |
| | C2 | - | - | - |
| | C3 | | - | - |
| | C4 | - | - | - |
| Other additives, % by mass | D1 | - | 5 | - |
| | D2 | - | - | - |
| | D3 | - | - | 5 |
| | D4 | - | - | - |
| SRV test seizure load, N | | 100 | 100 | 100 |

It can be seen from the results shown in Table 4 that the grease compositions of Examples 12 to 17 are each a grease composition whose seizure load in sliding of an iron-magnesium alloy is high to allow the frictional wear of iron and a magnesium alloy to be lower.

On the contrary, it can be seen from the results shown in Table 5 that the grease composition of Comparative Example 7, to which the alkenyl succinimide is not added, is insufficient in the effect of reducing wear on sliding of an iron-magnesium alloy. It can also be seen that the grease compositions of Comparative Examples 8 and 9 are insufficient in the effect of reducing wear on sliding of an iron-magnesium alloy as in the grease composition of Comparative Example 7, although they each contain lauryl alcohol having the effect of preventing wear on the non-ferrous metal or tricresyl phosphate (TCP) having the effect of preventing seizure between iron materials under extreme pressure. The results support that, even if lauryl alcohol or TCP is used, the surface modification by the chemical reaction is not made to the magnesium material such as magnesium and a magnesium alloy, not achieving the effect of preventing galling (seizure).

### [Example 18, Comparative Example 10]

In Example 18 and Comparative Example 10, the lubricating base oil A1 and each of the additives B1 and C1 were used to prepare a grease composition having each composition shown in Table 6.

The specific method of adjusting each of the grease compositions of Example 18 and Comparative Example 10 is as follows.

First, in Example 18, diphenylmethane-4,4'-diisocyanate was dissolved in the lubricating base oil A1 with heating, and a product prepared by dissolving cyclohexylamine in the lubricating base oil A1 with heating was added thereto. The alkenyl succinimide C1 was added to the produced gel-like substance, stirred and then passed through a roll mill to obtain a urea-based grease composition.

In addition, in Comparative Example 10, diphenylmethane-4,4'-diisocyanate was dissolved in the lubricating base oil A1 with heating, and a product prepared by dissolving cyclohexylamine in the lubricating base oil A1 with heating was added thereto. The produced gel-like substance was stirred, and then passed through a roll mill to obtain a urea-based grease composition.

### [SRV Oscillating Friction and Wear test III]

Each of the grease compositions of Example 18 and Comparative Example 10 was subjected to the SRV friction and wear test in the same manner as in the above SRV oscillating friction and wear test I except that the aluminum alloy plate (ADC12) of the test piece was changed to a copper alloy plate (C3604 material), to measure an SRV test seizure load (N). The obtained results are shown in Table 6.

**[Table 6]**

| | | Example 18 | Comparative Example 10 |
|---|---|---|---|
| Lubricating base oil, % by mass | A1 | Balance | Balance |
| | A2 | - | - |
| | A3 | - | - |
| Thickener, % by mass | B1 | 17 | 17 |
| | B2 | - | - |
| | B3 | - | - |
| | B4 | - | - |
| Alkenyl succinimide, % by mass | C1 | 5 | - |
| | C2 | - | - |
| | C3 | - | - |
| | C4 | - | - |
| Other additives, % by mass | D1 | - | - |
| | D2 | - | - |
| | D3 | - | - |
| | D4 | - | - |
| SRV test seizure load, N | | 400 | 100 |

It can be seen from the results shown in Table 6 that the grease composition of Example 18 is a grease composition whose seizure load in sliding of an iron-copper alloy is high to allow the frictional wear of iron and a copper alloy to be lower.

On the contrary, it can be seen from the results shown in Table 6 that the grease composition of Comparative Example 10, to which the alkenyl succinimide is not added, is insufficient in the effect of reducing wear on sliding of an iron-copper alloy.

## Claims

1. A grease composition containing:
at least one lubricating base oil selected from a mineral oil and a synthetic oil, and
1 to 40% by mass of a thickener and 0.5 to 15% by mass of an alkenyl succinimide based on the total amount of the grease composition,
the grease composition being used for a lubricating part in which at least one of members is made of a non-ferrous metal.

2. The grease composition according to claim 1, wherein the alkenyl succinimide is at least one selected from an alkenyl succinimide not containing boron and a boron-containing alkenyl succinimide whose boron content is more than 0 % by mass and 1.0% by mass or less based on the total amount of the boron-containing alkenyl succinimide.

3. The grease composition according to claim 1 or 2, wherein the succinimide compound has a polybutenyl group whose weight average molecular weight is 2000 or less.

4. The grease composition according to any one of claims 1 to 3, wherein the non-ferrous metal is at least one selected from aluminum, magnesium, copper, titanium, nickel, chromium, zinc, tin, lead and titanium, and alloys thereof.

5. The grease composition according to any one of claims 1 to 4, wherein a Vickers hardness of the non-ferrous metal is 150 or less.

6. A lubricating method of bringing the grease composition according to any one of claims 1 to 3 into contact with a lubricating part in which at least one of members is made of a non-ferrous metal.
